# EUROPÄISCHE PATENTSCHRIFT

(11) **EP 4 622 235 B1**
(45) Veröffentlichungstag und Bekanntmachung des Hinweises auf die Patenterteilung: **25.11.2026**
(21) Anmeldenummer: 24164845.0
(22) Anmeldetag: 20.03.2024
(51) Int. Cl.: H04N 1/00, H04N 1/401, H04N 1/60, B41J 2/21

(54) **VERFAHREN ZUR ÜBERWACHUNG DER FUNKTIONSWEISE VON MINDESTENS EINEM DRUCKKOPF**
METHOD FOR MONITORING THE OPERATION OF AT LEAST ONE PRINTHEAD
PROCÉDÉ DE SURVEILLANCE DU FONCTIONNEMENT D'AU MOINS UNE TÊTE D'IMPRESSION

(43) Veröffentlichungstag der Anmeldung: 24.09.2025
(73) Patentinhaber: Fritz Egger GmbH & Co. OG, 6380 St. Johann in Tirol (AT)
(72) Erfinder: Bergmann, Bernd, 30900 Wedemark (DE)
(74) Vertreter: Cohausz & Florack

(56) Entgegenhaltungen:
- EP-A1- 3 085 536
- EP-A1- 4 177 060

## Beschreibung

Die Erfindung betrifft ein Verfahren zur Überwachung der Funktionsweise von mindestens einem Druckkopf.

**In** der Druckindustrie ist eines der wesentlichen Ziele die Erzeugung möglichst gleicher Bild- und Farbeneindrücke der zu bedruckenden Materialien. Die sogenannte Farbkonstanz auch beim Druck unterschiedlicher Chargen auf unterschiedlichen Trägermaterialien soll möglichst immer gleich aussehen. Dies gilt insbesondere dann, wenn Corporate Identity gewünscht ist. Die von einer Firma gewählte Farbe bzw. die gewählten Farben sollen immer gleich aussehen, unabhängig davon, ob auf Glas, Papier, Kunststoff oder einem anderen Trägermaterial gedruckt wird. Das möglichst identische Aussehen der Druckprodukte ist gewünscht und somit ein Ziel der Druckindustrie.

Druckverfahren, Drucker, Druckfarbe und vor allem das Trägermaterial haben einen großen Einfluss darauf, wie ein Druckergebnis, das auf der Basis einer Druckdatei gedruckt worden ist, im ausgedruckten Zustand aussieht. Unter Druckfarbe wird jedes Druckmedium unter anderem wie Tinte oder Toner verstanden, mit dem Farbpigmente auf das Trägermaterial aufgebracht werden.

Während des industriellen Druckens, sei es im Single-Pass-Betrieb mit feststehendem Druckkopf und sich bewegenden Trägermaterial oder im Multi-Pass-Betrieb mit sich bewegendem Druckerkopf bei feststehendem Trägermaterial, ist es zur Einhaltung der vorgegebenen Farbkonstanz erforderlich, die Funktionsweise des zumindest einen Druckkopfes, insbesondere aller der eingesetzten Druckköpfe, zu überprüfen.

Eine lokale Veränderung im Drucksystem, bei der sich ein gesamter Druckkopf oder ein Teilbereich (Segment) eines Druckkopfes im Druckverhalten verändert hat, führt zu einem streifigen Druckbild. Diese Streifenbildung im Druckbild wird auch als Banding bezeichnet.

Eine Änderung der Einstellung des Druckers und somit eine mögliche Korrektur des Druckbildes wird im Stand der Technik durch ein Verändern der Steuerspannungen an dem mindestens einen Druckkopf durchgeführt. Dabei ist eine Beeinflussung einzelner Druckdüsen nicht möglich.

Daher ist es sinnvoll den Drucker in regelmäßigen Abständen zu überprüfen, ob jede Farbe homogen über die gesamte Druckbreite gedruckt werden kann und gegebenenfalls eine Banding-Korrektur durchzuführen. Dabei kann die Überwachung inline oder offline erfolgen. Bei einer Inline-Überwachung ist im Produktions- und Druckprozess ein bildgebendes Messsystem integriert und vermisst das Druckbild nach dem Drucken. Daneben ist auch eine Offline-Überwachung möglich, bei der das Druckbild mit einem separaten bildgebenden Messsystem wie einen Scanner durchgeführt wird.

Zur Banding-Korrektur werden spezielle Testformen angedruckt und analysiert, die so aufgebaut sind, dass für jede einzelne Druckfarbe in verschiedenen Intensitätsabstufungen Bereiche enthalten sind, die sich homogen über die gesamte Druckbreite erstrecken. Ein streifiger Druck durch das Banding lässt sich so einfach und schnell erkennen und ermöglicht es entsprechende Gegenmaßnahmen zu ergreifen (Reinigen, Druckkopf oder Druckkopfsegmentspannungen zu verändern). Wurden Gegenmaßnahmen eingeleitet, wird die Testform erneut angedruckt, um den Erfolg der Maßnahmen zu kontrollieren. Dieser Ablauf wird so lange wiederholt, bis die geforderte Qualität erreicht ist.

Eine Banding-Korrektur ist daher aufwändig und unterbricht den fortlaufenden Druckvorgang. Die beschriebene Banding-Korrektur wird daher nur in größeren, zum Teil zu großen Zeitabständen durchgeführt.

Die DE 10 2018 201 785 B3 offenbart ein Verfahren zur Detektion und Kompensation von defekten Druckdüsen in einer Inkjet-Druckmaschine, wobei ein Testmuster in Form eines gestauchten Druckbildes verwendet wird.

Die US 2016/0031252 A1 offenbart ein Verfahren zum Überwachen eines Drucksystems, bei dem ein auf den Druckdaten basierendes und unterschiedliche räumliche Auflösungen in einer ersten und einer zweiten Richtung aufweisender Überprüfungsdatensatz als Testmuster eingesetzt wird.

Die EP 3 578 939 A1 offenbart ein Verfahren zu Inline-Qualitätskontrolle von Dekordrucken auf Trägermaterialien, bei dem zunächst ein hyperspektral gemessenes Referenzbild erzeugt und als SOLL-Bild in einem digitalen Format gespeichert wird. Im laufenden Druckverfahren werden dann digitale IST-Bilder vom Druckbild mit einer herkömmlichen Aufnahmetechnik erzeugt und mit dem SOLL-Bild verglichen.

Die EP 4 177 060 A1 offenbart ein Verfahren und eine Vorrichtung zur Korrektur von Dichteunregelmäßigkeiten und Streifenbildung (Banding) in digitalen Tintenstrahldrucksystemen. Hierzu werden Bilddaten entsprechend einem Eingabe-Printjob unter Verwendung von für jede Düse gespeicherter Charakteristik-Information in auf den Aufzeichnungskopf abgestimmte Bilddaten umgewandelt und eine mit einem bildgebenden Messsystem eingelesene, gedruckte Bildaufnahme ausgewertet. Auf Basis der aus dieser Messung ermittelten Abweichungen steuert eine Steuereinheit Korrekturprozesse, die düsenweise oder für Düsenbereiche vorgenommen werden können.

Daher liegt der vorliegenden Erfindung das technische Problem zugrunde, ein Verfahren zur Überwachung der Funktionsweise von mindestens einem Druckkopf anzugeben, mit dem die zuvor genannten Probleme zumindest teilweise behoben werden.

Das zuvor aufgeführte technische Problem wird erfindungsgemäß durch ein Verfahren zur Überwachung der Funktionsweise von mindestens einem Druckkopf mit den Merkmalen des Anspruchs 1 gelöst, das eine Reihe von Verfahrensschritten aufweist, die nachfolgend einschließlich bevorzugter Ausgestaltungen beschrieben werden.

Wenn im Folgenden die Farbräume RGB (rot, grün, blau), CYMK (Cyan, Yellow, Magenta, Key(schwarz)) oder L*a*b*-Normfarbraum (bspw. CIELAB) genannt werden, so dient dieses der besseren Anschaulichkeit. Die Farbräume RGB, CYMK und CIELAB) stellen aber lediglich Platzhalter jeweils für alle möglichen nutzbaren Farbräume und können durch diese weiteren Farbräume ersetzt werden.

Zunächst wird bei dem Verfahren in Schritt a) ein zu druckendes Design als Eingangsbilddatei in einem Eingangsfarbraum (RGB) mit einer räumlichen Originalauflösung bereitgestellt. Für die Darstellung der Eingangsbilddatei wird in der Regel ein RGB-Farbraum (R - rot, G - grün, B - blau) verwendet, der in den meisten Bildverarbeitungsprogrammen eingesetzt wird. Für den RGB-Farbraum sind verschiedene Versionen als sRGB, AdobeRGB, Adobe Wide Gamut RGB etc. bekannt. Des Weiteren sind auch andere Farbraumdarstellung wie nach dem YUV-Farbmodell mit Angabe der Luminanz und der Chrominanz, CYMK (Cyan, Yellow, Magenta, Key (schwarz)) oder eine Farbseparation wie im Analogdruck möglich.

Die räumliche Originalauflösung der Eingangsbilddatei ist nicht vorgegeben. Die Originalauflösung kann größer, kleiner oder gleich der Druckerauflösung sein. Beim Drucken, speziell dem RIP-Vorgang (siehe unten), werden die Eingangsbilddaten dann in die Auflösung des Druckers umgerechnet. In der Praxis kann die Originalauflösung der Eingangsbilddaten geringer ist als die räumliche Auflösung des Druckers sein, da der Drucker die farbigen Pixel durch Halbtöne wiedergibt. Somit müssen auf der Fläche eines Pixels der Eingangsbilddatei zumindest teilweise mehrere Tintentropfen der jeweiligen Primärfarben des Druckfarbraums (CYMK) platziert werden, um den korrekten Farbeindruck zu erzeugen. Daraus folgt, dass die Druckerauflösung höher sein kann, um das Originalbild möglichst detailgetreu wiederzugeben.

Die Eingangsbilddatei wird dann im Schritt b) von einem Farbmanagementsystem mit einem Eingabeprofil in einen L*a*b*-Normfarbraum transferiert und L*a*b*-Eingangsbilddaten werden erzeugt.

Das Farbmanagement, auch Color-Management genannt, stellt eine möglichst exakte Reproduzierbarkeit sicher, damit die Eingangsbilddatei als Druckvorlage mithilfe eines beliebigen Ausgabegeräts originalgetreu durch den Druckprozess reproduziert kann. Wichtig ist dabei die richtige Konvertierung der Daten bis hin zur Druckbilddatei.

Dazu wird ein Farbmanagementsystem generiert, innerhalb dessen Geräteprofile, also Tabellen mit den Farbcharakteristiken des Geräts, den jeweiligen geräteeigenen Farbraum in einen unabhängigen Austauschfarbraum, meist ein L*a*b*-Normfarbraum wie etwa CIELAB, konvertiert werden kann. Mithilfe von sogenannten ICC-Profilen (ICC - International Color Consortium) können die Daten zwischen den verschiedenen Geräten so ausgetauscht werden, dass je nach physikalischer Grenze des Ein- und Ausgabegeräts zum Beispiel ein Ausdruck farblich möglichst identisch mit einer Monitordarstellung erstellt werden kann.

Insbesondere kann das Farbmanagement den Austauschfarbraum PCS-CIELAB anwenden, eine spezielle Ausgestaltung des CIELAB-Farbraums, der als Profil Connection Space (PCS) bezeichnet wird. Vorliegend wird daher bevorzugt ein ICC-Profil als Eingabeprofil verwendet, um die RGB-Bilddatei in den L*a*b*-Normfarbraum zu transferieren.

Das Farbmanagementsystem (CMS - Colour Management System) gewährleistet also die Kommunikation der Elemente der grafischen Prozesskette untereinander, indem es eine allen gemeinsame Sprache verwendet, Standard ist dabei der erwähnte L*a*b*-Normfarbraum, der in jedem ICC-Profil integriert ist. Der L*a*b*-Normfarbraum ist der Farbraum, der der menschlichen Sicht am nächsten kommt und der in absoluten Werten in einem Koordinatensystem die Farben definiert. Daher formt das Farbmanagement in jeder Bearbeitungsphase die im jeweiligen ICC-Profil integrierten L*a*b*-Werte aller Peripheriegeräte der Kette bis zum endgültigen Druck um. Der Farbmodus L*a*b* ist der Grundpfeiler der ICC-Architektur.

Der L*a*b*-Normfarbraum ist ein Farbraum, der den Bereich der wahrnehmbaren Farben abdeckt. Der L*a*b*-Normfarbraum wird durch ein dreidimensionales Koordinatensystem beschrieben. Die L*-Achse beschreibt die Helligkeit (Luminanz) der Farbe mit Werten von 0 (Schwarz) bis 100 (Weiß). Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen. Die Skalen der a*-Achse und der b*-Achse umfassen einen Zahlenbereich von -128 bis +127. Es sind aber auch andere Skalierungen bekannt.

Wird die Repräsentation der Farben im L*a*b*-Raum durchgeführt, so wird bei der Differenzanalyse der Abstand zweier Farben durch den Wert von ΔE00 (CIEDE2000) bestimmt. ΔE00 ist ein Maß für den Farbabstand, wobei der "Δ" hierbei als Zeichen der Differenz steht. Damit können farbige Druckergebnisse miteinander verglichen und die Abstände quantifiziert werden. Soll der Abstand zweier Farborte im L*a*b*-Normfarbraum bestimmt werden, so erfolgt die Berechnung des ΔE00 (CIEDE2000) der beiden Farborte gemäß der Formel in ISO13655:2008 Annex B.

Im nächsten Verfahrensschritt c) wird die L*a*b*-Eingangsbilddaten aus dem L*a*b*-Normfarbraum mit einem Ausgabeprofil in einen für den Drucker anwendbaren Druckfarbraum transferiert und eine Druckbilddatei wird erzeugt. Dabei wird bevorzugt wiederum ein ICC-Profil als ICC-Ausgabeprofil angewendet.

Der Druckfarbraum berücksichtigt die zum Drucken tatsächlich einzusetzenden Druckfarben, wobei die Anwendung des CYMK-Farbraums weit verbreitet ist (Cyan, Yellow, Magenta, Key bzw. Schwarz). Der Druckfarbraum kann aber grundsätzlich auch andere Druckfarben oder auch mehr Druckfarben enthalten. Insoweit der Druckfarbraum beschränkt ist und nicht alle Farbschattierungen im Druckfarbraum enthalten sind, so wird durch das Farbmanagementsystem gewährleistet, dass innerhalb des zur Verfügung stehenden Druckfarbraums eine möglichst genaue Wiedergabe des Designs der Eingangsbilddatei erfolgt.

Die nachfolgend beschriebenen Verfahrensschritte d) und e) können nach, zwischen oder vor den Verfahrensschritten b) und c) durchgeführte werden.

Im Verfahrensschritt d) wird das zu druckende Design als Vergleichsbilddatei in dem Eingangsfarbraum mit einer räumlichen Scanauflösung eines nachfolgend einzusetzenden bildgebenden Messsystems bereitgestellt und es werden von einem Farbmanagementsystem mit einem Eingabeprofil in einen L*a*b*-Normfarbraum transferiert und eine L*a*b*-Vergleichsbilddaten erzeugt. Somit liegt das zu druckende Design in zwei verschiedenen Bilddateien mit unterschiedlichen räumlichen Auflösungen vor, einmal in der Originalauflösung für die Eingangsbilddatei und einmal für die Vergleichsbilddaten in der räumlichen Auflösung des bildgebenden Messsystems, das nachfolgend erläutert wird.

Im Verfahrensschritt e) werden die L*a*b*-Vergleichsbilddaten mit dem Ausgabeprofil in den Druckfarbraum (CYMK) transferiert und eine CYMK-Vergleichsbilddatei erzeugt. Somit liegt auch die Vergleichsbilddatei in zwei verschiedenen Bilddateien mit unterschiedlichen räumlichen Auflösungen vor, einmal in der Originalauflösung und einmal in der räumlichen Auflösung des bildgebenden Messsystems.

Das Farbmanagementsystem wendet dann bevorzugt ein Rasterverfahren an, RIP - Raster Image Processing, bei dem eine Pixelfläche der Druckdatei durch eine Vielzahl von Tropfen der Druckfarben bzw. Tonerpunkten erzeugt wird, die gleichmäßig über die Fläche des Pixels verteilt angeordnet sind. Das RIP-Verfahren kann beispielsweise mit einer Software von Colorgate, Ergosoft oder Caldera durchgeführt werden.

Das Design wird dann im Verfahrensschritt f) von einem Drucker mit mindestens einem Druckkopf auf der Basis der Druckbilddatei auf einem Trägermaterial in einem Raster aus Pixeln aus mindestens einer Druckfarbe gedruckt. Das Raster besteht aus quer zur Druckrichtung verlaufenden Zeilen und aus in Druckrichtung verlaufenden Spalten. Als Drucktechnik kommt häufig Tintenstrahldruck zur Anwendung, aber andere Drucktechniken wie Laserdruck kann ebenfalls angewendet werden.

Somit kann beispielsweise die Zuordnung zwischen einer Spalte des Druckbildes und der Koordinate der Druckdüse innerhalb des entsprechenden Druckkopfes in der jeweiligen Reihe bekannt sein.

Als Trägermaterialien kommen Papier, Folie, Holz, Kunststoff, Keramik oder Mineralstoff in Betracht. Üblicherweise werden als Druckfarben Tinten mit Pigmenten verwendet, dabei ist die Nutzung der Farben CYMK weit verbreitet.

Grundsätzlich kann das beschriebene Verfahren für Drucker auch mit nur einem Druckkopf mit einer Druckbreite von 3 cm angewendet werden.

Die bevorzugte Anwendung des beschriebenen Verfahrens liegt aber im industriellen Bereich, wobei relativ breite Trägermaterialien bedruckt werden. Beispielsweise wird das Verfahren für das Drucken von Dekorpapieren eingesetzt, die für eine Beschichtung von Holzwerkstoffplatten verwendet werden. Dabei treten Breiten von bis zu 1 oder 2,3 Meter auf. Für diese Breiten der zu bedruckenden Trägermaterialien weist der Drucker eine Mehrzahl von synchron, aber einzeln angesteuerten Druckköpfen auf. Zudem können die einzelnen Druckköpfe einzeln ansteuerbare Segmente aufweisen.

Bei einer häufigen Anwendung des Verfahrens ist der Drucker bzw. sind die Druckköpfe stationär angeordnet und das Trägermaterial wird unter den Druckköpfen hindurch transportiert, so dass die Druckrichtung der Transportrichtung entspricht. Dieses Druckverfahren wird als Single-Pass-Drucken bezeichnet. Somit wird das Druckbild bzw. das Dekor in Zeilen quer zur Druckrichtung und in Spalten parallel zur Druckrichtung gedruckt. Wenn also eine Fehlfunktion an einem der Druckköpfe oder einem der Segmente eines der Druckköpfe auftritt, so treten Abweichungen im Druckbild spaltenweise auf.

Bei einer Single-Pass-Druckmaschine wird das Dekor also in einem Durchgang über die komplette Druckbreite gedruckt. Beispielsweise kann ein Bild über 6 Druckköpfe in der Breite mit 4 Farben (CYMK) gedruckt werden, d.h. ein CYMK-Drucker besitzt 4 Reihen a 6 Druckköpfe.

Das Druckbild wird anschließend im Schritt g), zumindest abschnittsweise, bevorzugt aber auf der gesamten Breite des Druckbildes, mit einem bildgebenden Messsystem mit der räumlichen Scanauflösung (beispielsweise gemessen in dots per inch, dpi), vorzugsweise im Bereich weniger gedruckter Pixel des Druckbildes, insbesondere mit einer räumlichen Auflösung von einem Pixel des Druckbildes, in Druckrichtung zeilenweise vermessen und eine aus Zeilen und Spalten bestehende Messbilddatei wird erzeugt. Die Messbilddatei weist dann für jeden vermessenen Bildpunkt eine mehrkanalige Farbinformation auf.

Das bildgebende System kann als spektrales Messsystem oder als Farbkamera, insbesondere als RGB-Kamera ausgebildet sein. Die räumliche Auflösung eines spektralen Messsystems liegt typischerweise im Bereich von 90 bis 200 dpi, während Farbkameras eine höhere Auflösung haben.

Bevorzugt wird als bildgebendes Messsystem ein aus dem Stand der Technik bekanntes Inline-Farbmesssystem (ICMS- Inline Colour Measurement System) der Firma ipac eingesetzt, das zur Farbbeurteilung mehrfärbiger Oberflächen eingesetzt wird. Das spektrale bildgebende Messsystem weist einen spektralen inline angeordneten Scanner auf, der für verschiedene Trägermaterialien (Papier, Folie, Holz, Kunststoff, Keramik, Mineralstoff) und verschiedene Druckverfahren (Tiefdruck, Digitaldruck, Flexodruck, Offsetdruck, Siebdruck) eingesetzt werden kann. Das ICMS ist eine spektrale ortsaufgelöste Scantechnologie zur Messung eines Druckbildes und ist in der Lage, einen durch ein gut trainiertes und gesundes menschliches Auge wahrgenommenen bildgebenden Farbeindruck maschinell nachzuempfinden und den Farbeindruck einer umfassenden objektiven Bewertung zu unterziehen.

Das spektrale bildgebende Messsystem ist beispielsweise eine multispektrale Kamera mit 12 Bildkanälen pro aufgenommenem Bildpunkt, die pro Bildkanal eine Farbinformation erzeugt. Somit entsteht pro aufgenommenem Bildpunkt (Pixel) ein Farbspektrum aus ca. 10 bis 12 Bildkanälen. Eine übliche Sensortechnik besteht darin, auf einem CMOS-Sensor einzelne Pixel mit unterschiedlichen Farbfiltern zu versehen, so dass mit einer Bildaufnahme eine Mehrzahl von spektralen Informationen aus einem aufgenommenen Bildbereich aufgezeichnet werden können. In bevorzugter Weise entspricht das spektrale bildgebende Messsystem den Anforderungen der Norm ISO 24585 Teil 1 und 2.

Das spektrale bildgebende Messsystem kann auch eine hyperspektrale Kamera sein, bei der pro Bildpunkt mittels einer optischen Einrichtung, beispielsweise mittels eines Prismas, das Licht spektral aufgespalten und mit einzelne spektrale Bereiche separat gemessen werden. Dadurch erhöht sich die spektrale Auflösung gegenüber einer multispektralen Kamera auf ca. 20 bis zu 250 oder mehr Bildkanälen.

Im Gegensatz zu einer RGB-Kamera wird somit pro Bildpunkt nicht nur eine Farbe, sondern eine spektrale Verteilung mit erheblich mehr Informationstiefe gewonnen. Während der Messung werden normierte Lichtbedingungen eingehalten, beispielsweise beträgt die Messgeometrie des Bildgebungssystems 45°:0° (Eintritt:Austritt).

Alternativ dazu kann das bildgebende Messsystem als mindestens ein Farbkamerasystem mit mindestens einer RGB-Kamera ausgebildet sein, das bevorzugt RGB-Bilddaten liefert. Die Messbilddatei weist dann RGB-Pixelinformationen auf, beispielsweise mit einer Farbtiefe von 16 bit, auf deren Basis auch ohne spektrale Informationen geringe Farbunterschiede unterschieden werden können.

Der nächste Verfahrensschritt h) beinhaltet, dass die Messbilddatei mit einem Eingabeprofil in eine L*a*b*-Messbilddatei transferiert wird. Die Berechnung der L*a*b*-Messbilddatei aus Bildinformationen einer spektralen Messbilddatei erfolgt beispielsweise gemäß der Norm CIE-15 bevorzugt in der CIE-Lichtart D50 und dem 2°-Normalbeobachter (CIE-15 ASTM 308E, ISO 13655 Annex I). Die Berechnung der L*a*b*-Messbilddatei aus Bildinformationen einer RGB-Messbilddatei erfolgt beispielsweise mit einer speziell für die jeweiligen Messbedingungen erstellten Transformation, die durch Kalibrierung mittels eines Spektrophotometer gewonnen wird.

Anschließend wird im Schritt i) die L*a*b*-Messbilddatei mit dem Ausgabeprofil in den Druckfarbraum transferiert und eine CYMK-Messbilddatei wird erzeugt. Dabei wird dasselbe Ausgabeprofil angewendet, das bereits als Ausgabeprofil vor dem Drucken des Designs bei der Umwandlung der L*a*b*-Bilddaten aus dem L*a*b*-Normfarbraum in den Druckfarbraum in Form der Druckbilddatei angewendet wurde. Dabei wird erneut bevorzugt der CYMK-Farbraum als Druckfarbraum verwendet.

Die Anwendung desselben ICC-Ausgabeprofils gewährleistet dabei eine optimale Vergleichbarkeit der im Anschluss zu vergleichen Daten.

Dazu werden zunächst im Verfahrensschritt j) die CIELAB-Vergleichsbilddatei mit der CIELAB-Messbilddatei oder die CYMK-Vergleichsbilddatei mit der CYMK-Messbilddatei zueinander registriert. Wegen einer höheren Genauigkeit ist der Vergleich zwischen den CIELAB-Dateien bevorzugt, da durch die weitere Transformation in den CYMK-Farbraum Ungenauigkeiten in der pixelgenauen Zuordnung des Designs auftreten können.

Wenn in bevorzugter Weise die CIELAB-Dateien miteinander registriert werden, dann wird der Schritt i) des Erzeugens der CYMK-Messbilddatei bevorzugt erst nach der Registrierung nach Merkmal j) durchgeführt.

Das Registrieren erfolgt durch Verschieben, Verdrehen oder Verzerren der Pixelmatrizen zueinander durch einen pixelgenauen Vergleich. Damit wird eine möglichst genaue Übereinstimmung der Pixel oder Pixelgruppen beider Bilddateien erreicht.

Im nächsten Verfahrensschritt k) wird zumindest abschnittsweise, beispielsweise nur in einem interessierenden Abschnitt (ROI - region of interest) aus der CYMK-Vergleichsbilddatei und der CYMK-Messbilddatei eine Scandifferenzbilddatei erzeugt. Dadurch entstehen CYMK-Korrekturwerte in Scanauflösung, die charakteristisch für die Soll/Ist-Abweichungen der CYMK-Werte in Scanauflösung sind.

Im Schritt l) wird dann die Scandifferenzbilddatei aus der Scanauflösung in die Originalauflösung der Eingangsbilddatei als Originaldifferenzbilddatei transferiert, wobei ein mathematischer Algorithmus wie eine einfach skalare Interpolation, eine bilineare Interpolation oder bikubische Interpolation angewendet wird. Dadurch werden CYMK-Korrekturwerte in Originalauflösung erhalten.

Im Verfahrensschritt m) werden komponentenweise und pixelweise die Differenzwerte der Originaldifferenzbilddatei ermittelt. Die Differenzwerte sind bei einer Übereinstimmung der Vergleichsbilddatei und Messbilddatei in der Größenordnung einzelner Pixel bzw. Pixelgruppen in Originalauflösung theoretisch gleich Null, sind aber in der Praxis rauschbehaftet und schwanken um den Nullwert.

Die ermittelten Differenzwerte können über die Breite direkt den entsprechenden Druckköpfen und gleichzeitig den Werten in der für den Druck verwendeten Druckbilddatei zugeordnet werden. Da in bevorzugter Weise sowohl die Vergleichsbilddatei als auch die Messbilddatei mit dem gleichen Ausgabeprofil (ICC-Profil) erzeugt werden, um CIELAB-Farbwerte in Farbkanäle (CYMK) des Druckers umzurechnen, kann die Ursache für eine Streifenbildung im Druckbild eindeutig Positionen bzw. Abschnitten in der Vergleichsbilddatei zugeordnet werden.

Die Auswertung der Originaldifferenzbilddatei kann prinzipiell zeilenweise für die einzelnen Pixel einer Zeile erfolgen. Jedoch ist es vorteilhaft, wenn die Differenzwerte spaltenweise in Druckrichtung über eine vorgegebene Anzahl von Zeilen gemittelt werden, vorzugsweise erfolgt diese Mittelung fortlaufend während des Druckvorgangs. Da die Druckgeschwindigkeit in der Regel relativ hoch ist und die zu erwartenden Schwankungen mit geringer Zeitkonstante auftreten, kann eine solche Mittelung zu besseren Ergebnissen führen.

Wenn die Werte in der Originaldifferenzbilddatei für jeweils eine der Druckfarben im Wesentlichen um den Nullwert schwanken, kann dies als Maß dafür dienen, dass das Druckergebnis keine oder nur eine verschwindend geringe Abweichung in dieser Druckfarbe aufweist.

Im Verfahrensschritt n) wird ein Vergleich der Differenzwerte mit einer Toleranzschwelle verglichen. Dann, wenn die Beträge der Differenzwerte einen vorgegebenen Schwellenwert überschreiten, wird die Druckbilddatei um die Differenzwerte der Originaldifferenzbilddatei korrigiert und als neue Druckbilddatei gespeichert. Dabei kann die Druckbilddatei additiv um gleiche Beträge nach oben oder unten verändert werden. Alternativ können die Werte in der Druckbilddatei proportional um eine zu errechnende Prozentzahl verändert werden.

Somit kann, wenn die Beträge der Differenzwerte den vorgegebenen Schwellenwert nach unten oder nach oben überschreiten, eine Fehlfunktion des den abweichenden Pixeln zugeordneten Druckkopfes ermittelt werden. Der Schwellenwert kann dabei für jede der Druckfarben unterschiedlich oder gleich gewählt werden. Für jeden Abschnitt von Zeilen der Originaldifferenzbilddatei, in denen eine Überschreitung des Schwellenwertes festgestellt wird, kann dann eine Fehlfunktion des zugeordneten Druckkopfes festgestellt und mittels der korrigierten Druckbilddatei zumindest teilweise behoben werden.

Die Korrektur der Druckbilddatei ermöglicht dann für einen nachfolgenden Druck einen Ausgleich der Fehlfunktion des Druckkopfes oder des Druckkopfsegmentes. Eines Eingriffes in die Steuerspannungen des Druckkopfes bedarf es dann nicht, sondern der Druckkopf wird durch korrigierte Druckdaten so angesteuert, dass das Druckbild mit der Vorlage besser oder innerhalb der Schwellenwertgrenzen übereinstimmt.

Somit erfolgt in Abhängigkeit davon, ob die Schwellenwerte überschritten werden oder nicht, das Drucken des Designs mit der korrigierten Druckdatei oder mit der unveränderten Druckdatei.

In bevorzugter Weise wird die korrigierte Druckbilddatei nach Merkmal n) als Druckbilddatei iterativ, also wiederholend in den Verfahrensschritten f) bis n) eingesetzt. Somit können die Differenzen sukzessive besser ausgeglichen werden, als wenn das Verfahren nur einmal durchgeführt wird.

Des Weiteren kann dann, wenn die Beträge der Differenzwerte einen vorgegebenen Schwellenwert nicht überschreiten, die Verfahrensschritte f) bis n) in einem vorgegebenen zeitlichen Abstand zur Überwachung der Funktionsweise von mindestens einem Druckkopf erneut durchgeführt werden. Je nach Größe des zeitlichen Abstandes wird regelmäßig oder kontinuierlich das Verfahren durchgeführt.

Mit dem zuvor beschriebenen Verfahren können Farbabweichungen von weniger als ΔE00= 1 im L*a*b*-Normfarbraum gemessen werden.

Werden dekorierte Oberflächen im Digitaldruckverfahren erstellt, kann also die bildgebende Farbmesstechnik dazu genutzt werden, um die Farbtreue des Druckbildes zu prüfen. Treten bei einem Farbdruck zur Reproduktion eines Designs Farbabweichungen auf, können diese mit dem beschriebenen Verfahren gemessen und korrigiert werden. Daher kann der mindestens eine Druckkopf des Druckers durch Korrektur der Druckbilddatei so eingesetzt werden, dass die Differenzwerte in der Originaldifferenzbilddatei minimiert werden.

Das Korrigieren des Druckergebnisses kann dabei im fortlaufenden Druckbetrieb ohne Unterbrechung des Druckens erfolgen, da die auftretenden und durch das beschriebene Verfahren erkennbaren Änderungen so gering sind, dass diese im Druckbild für das menschliche Auge fast nicht wahrnehmbar sind.

In bevorzugter Weise kann das Drucken des mindestens einen Druckkopfes des Druckers durch Veränderung der Druckbilddatei so angepasst werden, dass die Differenzwerte in der Differenzbilddatei minimiert werden. Somit kann durch die Anpassung eine Korrektur von durch den mindestens einen Druckkopf erzeugten Fehlern erfolgen, ohne dass der Druckprozess unterbrochen werden muss.

Die Anpassung erfolgt dabei bevorzugt über das Farbmanagement und den anschließenden RIP und nicht über Steuerparameter in der Druckersteuerung. Ein direktes Umschalten im laufenden Betrieb ist technisch möglich, wenn im Druckerspeicher neben der aktuell zu druckenden Druckbilddatei auch die korrigierte Druckbilddatei gespeichert werden kann und von der aktuellen Druckbilddatei auf die korrigierte Druckbilddatei umgeschaltet werden kann.

Somit kann in Kombination des Farbmanagementsystems mit der Druckersteuerung eine automatische Korrektur erreicht werden.

Eine weiter verbesserte Farbkorrektur kann nach dem zuvor beschriebenen Verfahren dann erreicht werden, wenn das gesamte Drucksystem mit dem gleichen bildgebenden Farbmesssystem charakterisiert, also kalibriert, insbesondere linearisiert und profiliert wird.

Im Folgenden wird die Erfindung anhand von Ausführungsbeispielen mit Bezug auf die Zeichnung erläutert. In der Zeichnung zeigen
- Fig. 1: eine erste Anlage zur Durchführung eines erfindungsgemäßen Verfahrens,
- Fig. 2: eine zweite Anlage zur Durchführung eines erfindungsgemäßen Verfahrens,
- Fig. 3: eine dritte Anlage zur Durchführung eines erfindungsgemäßen Verfahrens,
- Fig. 4: ein Flussdiagramm, das ein erfindungsgemäßes Verfahren beschreibt und

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

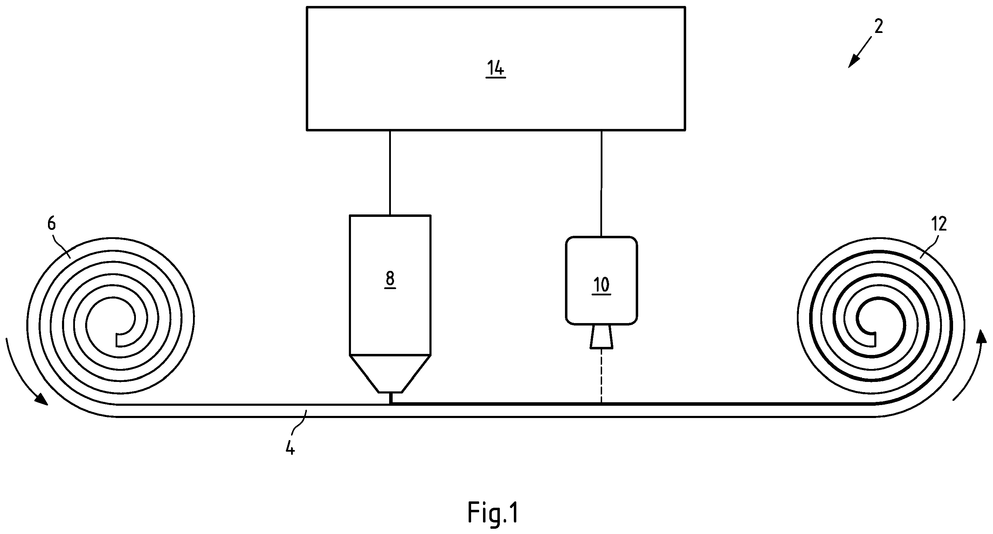

Fig. 1 zeigt eine erste Anlage 2 zur Durchführung des Verfahrens zur automatisierten Charakterisierung eines kontinuierlichen Digitaldrucksystems. Zunächst wird das Trägermaterial 4 von einer ersten Rolle 6 abgerollt, unterhalb des Digitaldruckers 8 und des optischen Messsystems 10 geführt und dann wieder auf einer Rolle 12 aufgerollt. Insoweit kann man von einem endlosen Trägermaterial 4 sprechen, mit dem das kontinuierliche Drucken und Charakterisieren durchgeführt wird. Dabei ist selbstverständlich, dass das endlose Band eine endliche, aber große Länge aufweist.

Die Ergebnisse der optischen Messungen durch das optische Messsystem werden einer Steuer- und Charakterisierungseinrichtung 14 übertragen, die wiederum nicht nur die Druckdateien oder andere Steuerungsdateien, sondern auch die Charakterisierungsdateien auf den Digitaldrucker 8 überträgt.

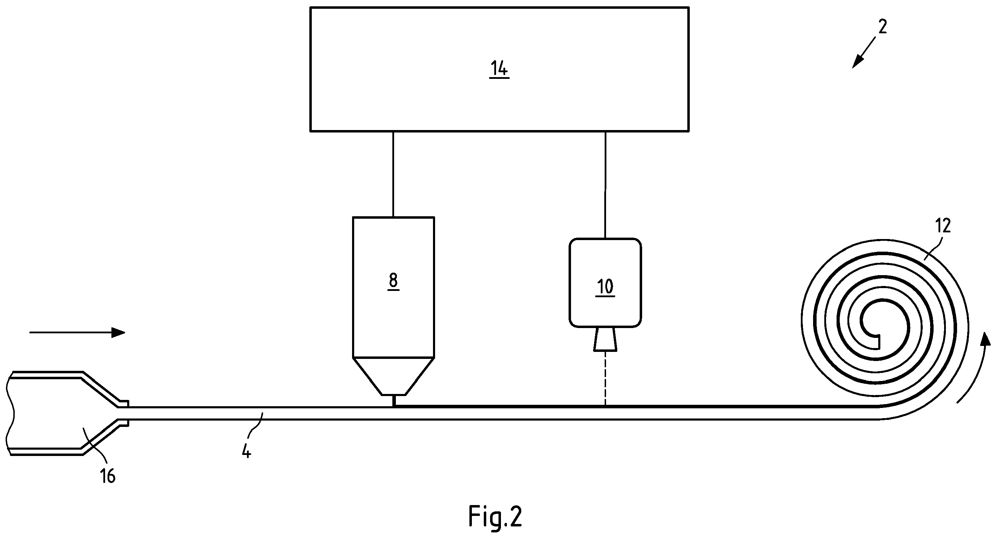

Fig. 2 zeigt eine zweite Anlage 2 zur Durchführung des Verfahrens zur automatisierten Charakterisierung eines kontinuierlichen Digitaldrucksystems. Im Vergleich zur Anlage nach Fig. 2 wird das Trägermaterial 4 nicht von einer Rolle abgewickelt, sondern durch eine Extrusionsprozess hergestellt. Dazu ist schematisch ein Extrusionswerkzeug 16 dargestellt, aus dem ein Strang zur Herstellung beispielsweise eines Kantenmaterials für die Anwendung bei Möbelplatten extrudiert wird. Grundsätzlich notwendige Kalander und Abkühlstationen sind hier der Einfachheit wegen nicht dargestellt. Anstelle des Extrusionswerkzeugs 16 kann auch eine Stranggussvorrichtung eingesetzt werden, um einen kontinuierlichen Strang an Trägermaterial zu erzeugen.

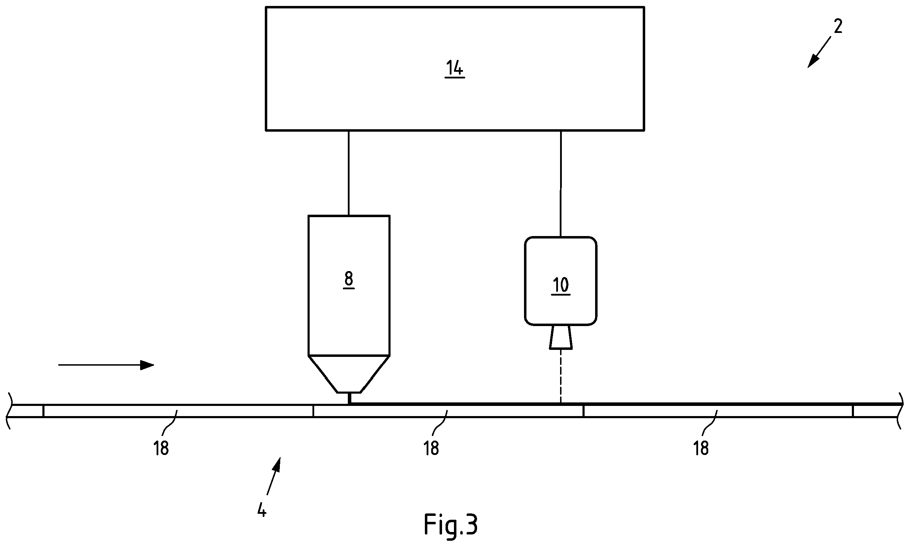

Fig. 3 zeigt eine dritte Anlage 2 zur Durchführung des Verfahrens zur automatisierten Charakterisierung eines kontinuierlichen Digitaldrucksystems. Im Vergleich zu den Anlagen nach den Fig. 2 und 3 ist das Trägermaterial 4 nicht als endloses Material ausgebildet, sondern besteht aus einer Vielzahl von aneinander anstoßenden Elementen 18, beispielsweise Platten oder Blättern. Das Trägermaterial 4 besteht also aus einzelnen Elementen 18, die vor und nach dem Bedrucken separat vorliegen. Das kontinuierliche Drucken und Messen von Farbcharts erfolgt dann auf dem aus einzelnen Elementen 18 zusammengesetzten Trägermaterial 4.

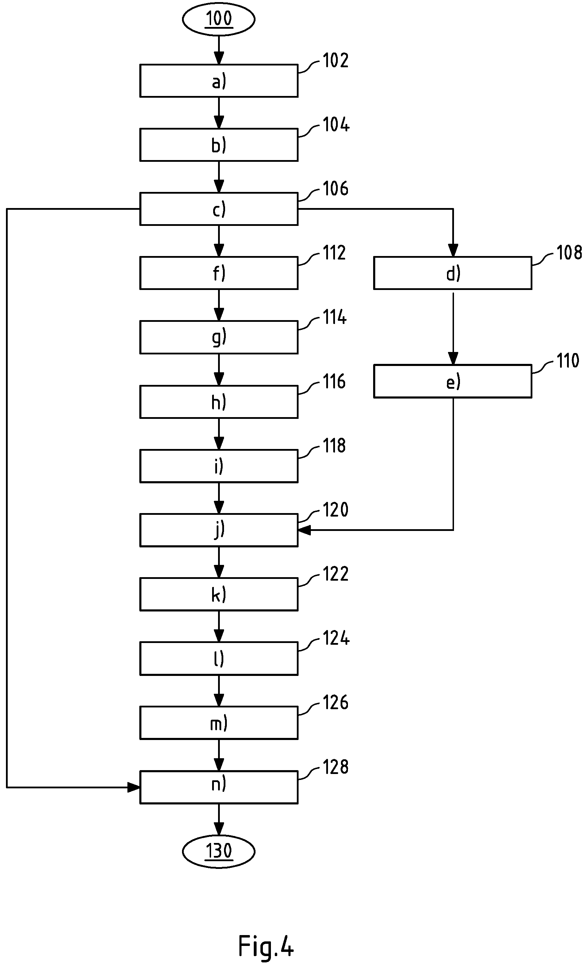

Fig. 4 zeigt ein Ausführungsbeispiel eines erfindungsgemäßen Verfahrens zur Überwachung der Funktionsweise von mindestens einem Druckkopf.

Nach dem Start in Schritt 100 wird in Schritt 102 entsprechend Verfahrensschritt a) ein zu druckendes Design als Eingangsbilddatei in einem Eingangsfarbraum (RGB) mit einer räumlichen Originalauflösung (Angabe in dots per inch - dpi) bereitgestellt. Dazu kann die Datei mit einem Graphik- oder Bildbearbeitungsprogramm selbst erzeugt oder eine bereits erzeugte und gespeicherte Eingangsbilddatei verwendet werden.

Im Schritt 104 wird zunächst der Verfahrensschritt b) ausgeführt, bei dem die Eingangsbilddatei (RGB) von einem Farbmanagementsystem mit einem Eingabeprofil in einen L*a*b*-Normfarbraum transferiert wird und bei dem L*a*b*-Eingangsbilddaten erzeugt werden. Daraus entsteht eine L*a*b*-Eingangsbilddatei, die das zu druckende Design in einem unabhängigen Farbraum darstellt.

In Schritt 106 wird danach Verfahrensschritt c) durchgeführt, bei dem die L*a*b*-Eingangsbilddaten aus dem L*a*b*-Normfarbraum mit einem Ausgabeprofil in einen für den Drucker anwendbaren Druckfarbraum (CYMK) transferiert und eine Druckbilddatei erzeugt wird

In Schritt 108, der seitlich vom Schritt 106 abgeht, wird der Verfahrensschritt d) durchgeführt, bei dem das zu druckende Design als Vergleichsbilddatei in dem Eingangsfarbraum mit einer räumlichen Scanauflösung eines nachfolgend einzusetzenden bildgebenden Messsystems bereitgestellt wird und von einem Farbmanagementsystem mit einem Eingabeprofil in einen L*a*b*-Normfarbraum transferiert und eine L*a*b*-Vergleichsbilddaten erzeugt werden. Dazu wird mittels eines Raster Image Processors (RIP) die Druckbilddatei für den Tintenstrahldrucker 8 (siehe Fig. 1 bis 3) als Steuerdatei umgerechnet. Durch den RIP wird für jeden zu druckende Pixel und für jede Druckfarbe eine Verteilung einer Vielzahl von Tropfen der jeweiligen Druckfarbe errechnet.

In Schritt 110 wird der Verfahrensschritt e) durchgeführt, bei dem die L*a*b*-Vergleichsbilddaten mit dem Ausgabeprofil in den Druckfarbraum (CYMK) transferiert und eine CYMK-Vergleichsbilddatei erzeugt wird. Somit liegt für einen späteren Verfahrensschritt die Vergleichsbilddatei im Druckfarbraum (CYMK) in Scanauflösung vor, die aus der Eingangsbilddatei in Originalauflösung abgeleitet wurde.

In Schritt 112, nachfolgend zu Schritt 106 wird der Verfahrensschritt f) durchgeführt, das Design von dem Tintenstrahldrucker 8 mit mindestens einem Druckkopf auf der Basis der Druckbilddatei 124 bzw. der Steuerdatei 128 auf einer Papierbahn als Trägermaterial 4 (siehe Fig. 1 bis 3) in einem aus quer zur Druckrichtung verlaufenden Zeilen und aus in Druckrichtung verlaufenden Spalten bestehenden Raster aus Pixeln aus mindestens einer Druckfarbe CYMK gedruckt. Wegen der Breite der Papierbahn 4 weist der Drucker 8 für jede Druckfarbe separat mehrere Druckköpfe mit einzelnen Segmenten aus Düsen.

Das Vermessen und Auswerten des gedruckten Designs wird anschließend mit einem bildgebenden Messsystem und Auswertesystem erfasst und bewertet.

Zunächst wird dazu in Schritt 114 der Verfahrensschritt g) durchgeführt, bei dem das Druckbild, zumindest abschnittsweise, mit einem bildgebenden Messsystem mit der räumlichen Scanauflösung, insbesondere im Bereich weniger gedruckter Pixel, in Druckrichtung zeilenweise vermessen und eine aus Zeilen und Spalten bestehende Messbilddatei erzeugt wird. Dabei kommt das Messsystem ICMS der Firma ipac zum Einsatz. Die Lichtbedingungen sind beim Messvorgang normiert, die Messgeometrie des Bildgebungssystems beträgt 45°:0° (Eintritt:Austritt).

Im Schritt 116 wird dann gemäß Verfahrensschritt h) die Messbilddatei mit einem Eingabeprofil in eine L*a*b*-Messbilddatei transferiert. Die Umrechnung erfolgt dabei bevorzugt gemäß der Norm CIE-15 bevorzugt in der CIE-Lichtart D50 und dem 2°-Normalbeobachter (CIE-15 ASTM 308E, ISO 13655 Annex I).

Im weiteren Schritt 118 wird entsprechend dem Verfahrensschritt i) die L*a*b*-Messbilddatei mit dem Ausgabeprofil in den Druckfarbraum (CYMK) transferiert und eine CYMK-Messbilddatei erzeugt, die für den Vergleich mit der Vergleichsbilddatei herangezogen werden kann. Dabei wird bevorzugt dasselbe ICC-Ausgabeprofil angewendet, das auch für das Erstellen der CYMK-Druckbilddatei verwendet worden ist.

In dem Auswertesystem wird dann in Schritt 120 der Verfahrensschritt j) durchgeführt, bei dem die CYMK-Vergleichsbilddatei mit der CYMK-Messbilddatei zueinander registriert werden, also durch Verschieben, Verdrehen oder Verzerren der Pixelmatrizen aufeinander ausgerichtet.

Das Verfahren wird dann im Schritt 122 mit dem Verfahrensschritt k) fortgesetzt, bei dem zumindest abschnittsweise (ROI) aus der CYMK-Vergleichsbilddatei und der CYMK-Messbilddatei eine Scandifferenzbilddatei erzeugt wird. Somit werden CYMK-Korrekturwerte in Scanauflösung erzeugt, die eine Soll/Ist-Abweichung in CYMK in Scanauflösung darstellen. Die Differenzwerte der Scandifferenzbilddatei können dabei durch Mitteln der Werte einer Spalte über eine vorgegebene Anzahl von Zeilen ermittelt werden.

In Schritt 124 wird dann der Verfahrensschritt l) ausgeführt, bei dem die Scandifferenzbilddatei aus der Scanauflösung in die Originalauflösung als Originaldifferenzbilddatei transferiert wird. Dazu werden mathematische Algorithmen wie einfach skalare Interpolation, bilineare Interpolation oder bikubische Interpolation angewendet. Dadurch werden CYMK-Korrekturwerte in Originalauflösung erhalten.

Der Verfahrensschritt m) wird in Schritt 126 ausgeführt, bei dem komponentenweise, also für jede Druckfarbe des Druckfarbraums pixelweise oder spaltenweise die Differenzwerte der Originaldifferenzbilddatei ermittelt werden. Daraus ergibt sich eine Korrekturdatei in Originalauflösung, die im nachfolgenden Schritt zur Korrektur herangezogen werden kann.

In Schritt 128) wird der Verfahrensschritt n) durchgeführt, bei dem dann, wenn die Beträge der Differenzwerte einen vorgegebenen Schwellenwert überschreiten, die Druckbilddatei, die in Schritt 106 erzeugt worden ist, um die Differenzwerte der Originaldifferenzbilddatei korrigiert wird und als neue Druckbilddatei gespeichert wird. Hierbei kann entweder ein absoluter Wert additiv hinzugefügt werden oder es findet eine proportionale Korrektur um einen errechneten Prozentualwert statt.

Die alte Druckbilddatei oder die neue Druckbilddatei wird dann für ein weiteres Drucken verwendet. Somit wird abhängig vom Erreichen der Schwellenwerte die korrigierte oder unkorrigierte Druckdatei für das weitere Drucken eingesetzt.

Das Verfahren endet dann mit Schritt 130.

Somit kann in fortlaufender Weise ohne Unterbrechung des Druckvorgangs ein durch das Farbmanagementsystem behebbarer Fehler behoben und somit die Druckqualität verbessert werden. Diese Fehlerbehebung kann auch bei für ein menschliches Auge nicht sichtbaren Farbabweichungen im L*a*b*-Farbraum von weniger als ΔE00 = 1 durchgeführt werden. Das bedeutet, dass Fehler nur im für das menschliche Auge nicht wahrnehmbaren Bereich entstehen und wieder behoben werden können.

Das zuvor erläuterte Ausführungsbeispiel umfasst als bildgebendes optisches Messsystem ein bildgebendes spektrales Messsystem. Nicht dargestellt ist die Alternative, dass das optische Messsystem ein RGB-Kamerasystem aufweist und die Messbilddateien als RGB-Messbilddateien erzeugt und weiterverarbeitet werden.

## Patentansprüche

1. Verfahren zur Überwachung der Funktionsweise von mindestens einem Druckkopf,
a) bei dem ein zu druckendes Design als Eingangsbilddatei in einem Eingangsfarbraum mit einer räumlichen Originalauflösung bereitgestellt wird (102),
b) bei dem die Eingangsbilddatei von einem Farbmanagementsystem mit einem Eingabeprofil in einen L*a*b*-Normfarbraum transferiert wird und bei dem L*a*b*-Eingangsbilddaten erzeugt werden (104),
c) bei dem die L*a*b*-Eingangsbilddaten aus dem L*a*b*-Normfarbraum mit einem Ausgabeprofil in einen für den Drucker anwendbaren Druckfarbraum transferiert und eine Druckbilddatei erzeugt wird (106),
d) bei dem das zu druckende Design als Vergleichsbilddatei in dem Eingangsfarbraum mit einer räumlichen Scanauflösung eines nachfolgend einzusetzenden bildgebenden Messsystems bereitgestellt wird und von einem Farbmanagementsystem mit einem Eingabeprofil in einen L*a*b*-Normfarbraum transferiert und eine L*a*b*-Vergleichsbilddaten erzeugt werden (108),
e) bei dem die L*a*b*-Vergleichsbilddaten mit dem Ausgabeprofil in den Druckfarbraum transferiert und eine CYMK-Vergleichsbilddatei erzeugt wird (110),
f) bei dem das Design von einem Drucker mit mindestens einem Druckkopf auf der Basis der Druckbilddatei auf einem Trägermaterial in einem aus quer zur Druckrichtung verlaufenden Zeilen und aus in Druckrichtung verlaufenden Spalten bestehenden Raster aus Pixeln aus mindestens einer Druckfarbe gedruckt wird (112),
g) bei dem das Druckbild, zumindest abschnittsweise, mit einem bildgebenden Messsystem mit der räumlichen Scanauflösung, insbesondere im Bereich weniger gedruckter Pixel, in Druckrichtung zeilenweise vermessen und eine aus Zeilen und Spalten bestehende Messbilddatei erzeugt wird (114),
h) bei dem die Messbilddatei mit einem Eingabeprofil in eine L*a*b*-Messbilddatei transferiert wird (116),
i) bei dem die L*a*b*-Messbilddatei mit dem Ausgabeprofil in den Druckfarbraum transferiert und eine CYMK-Messbilddatei erzeugt wird (118),
j) bei dem die CIELAB-Vergleichsbilddatei mit der CIELAB-Messbilddatei oder die CYMK-Vergleichsbilddatei mit der CYMK-Messbilddatei zueinander registriert werden (120),
k) bei dem zumindest abschnittsweise aus der CYMK-Vergleichsbilddatei und der CYMK-Messbilddatei eine Scandifferenzbilddatei erzeugt wird (122),
l) bei dem die Scandifferenzbilddatei aus der Scanauflösung in die Originalauflösung als Originaldifferenzbilddatei transferiert wird durch Anwendung mathematischer Algorithmen, insbesondere Interpolation einfach skalar, bilinear oder bikubisch (124),
m) bei dem komponentenweise, insbesondere spaltenweise oder pixelweise, die Differenzwerte der Originaldifferenzbilddatei ermittelt werden (126),
n) bei dem dann, wenn die Beträge der Differenzwerte einen vorgegebenen Schwellenwert überschreiten, die Druckbilddatei um die Differenzwerte der Originaldifferenzbilddatei korrigiert wird, insbesondere additiv oder proportional, und als neue Druckbilddatei gespeichert wird (128).

2. Verfahren nach Anspruch 1,
bei dem die korrigierte Druckbilddatei nach Merkmal n) als Druckbilddatei iterativ in den Verfahrensschritten f) bis n) eingesetzt wird.

3. Verfahren nach Anspruch 1 oder 2, bei dem dann, wenn die Beträge der Differenzwerte einen vorgegebenen Schwellenwert nicht überschreiten, die Verfahrensschritte f) bis n) in einem vorgegebenen zeitlichen Abstand zur Überwachung der Funktionsweise von mindestens einem Druckkopf erneut durchgeführt wird.

## Claims

1. A method for monitoring the operation of at least one printhead,
a) wherein a design to be printed is provided as an input image file in an input color space with a spatial original resolution (102),
b) wherein the input image file is converted by a color management system, using an input profile, into an L*a*b* standard color space, and wherein L*a*b* input image data are generated (104),
c) wherein the L*a*b* input image data are converted from the L*a*b* standard color space, using an output profile, into a print color space usable by the printer, and a print image file is generated (106),
d) wherein the design to be printed is provided as a comparison image file in the input color space with a spatial scan resolution of an imaging measuring system to be used subsequently, and is converted by a color management system, using an input profile, into an L*a*b* standard color space, and L*a*b* comparison image data are generated (108),
e) wherein the L*a*b* comparison image data are converted, using the output profile, into the print color space, and a CYMK comparison image file is generated (110),
f) wherein the design is printed by a printer having at least one printhead on the basis of the print image file onto a substrate in a grid of pixels formed from at least one printing ink, the grid consisting of rows extending transversely to the printing direction and columns extending in the printing direction (112),
g) wherein the printed image, at least in sections, is measured by an imaging measuring system with the spatial scan resolution, in particular in a range of a few printed pixels, row by row in the printing direction, and a measurement image file consisting of rows and columns is generated (114),
h) wherein the measurement image file is converted, using an input profile, into an L*a*b* measurement image file (116),
i) wherein the L*a*b* measurement image file is converted, using the output profile, into the print color space, and a CYMK measurement image file is generated (118),
j) wherein the CIELAB comparison image file and the CIELAB measurement image file, or the CYMK comparison image file and the CYMK measurement image file, are registered with one another (120),
k) wherein a scan difference image file is generated, at least in sections, from the CYMK comparison image file and the CYMK measurement image file (122),
l) wherein the scan difference image file is converted from the scan resolution into the original resolution as an original difference image file by applying mathematical algorithms, in particular simple scalar, bilinear, or bicubic interpolation (124),
m) wherein the difference values of the original difference image file are determined component by component, in particular column by column or pixel by pixel (126),
n) wherein, if the absolute values of the difference values exceed a predetermined threshold value, the print image file is corrected by the difference values of the original difference image file, in particular additively or proportionally, and is stored as a new print image file (128).

2. The method according to claim 1,
wherein the corrected print image file according to feature n) is used iteratively as the print image file in method steps f) to n).

3. The method according to claim 1 or 2,
wherein, if the absolute values of the difference values do not exceed a predetermined threshold value, method steps f) to n) are carried out again at a predetermined time interval for monitoring the operation of at least one printhead.

## Revendications

1. Procédé de surveillance du fonctionnement d'au moins une tête d'impression,
a) au cours duquel un motif à imprimer est fourni sous la forme d'un fichier d'image d'entrée dans un espace colorimétrique d'entrée, avec une résolution spatiale d'origine (102),
b) au cours duquel le fichier d'image d'entrée est transféré par un système de gestion des couleurs, à l'aide d'un profil d'entrée, dans un espace colorimétrique normalisé L*a*b, et au cours duquel des données d'image d'entrée L*a*b sont générées (104),
c) au cours duquel les données d'image d'entrée L*a*b sont transférées de l'espace colorimétrique normalisé L*a*b, à l'aide d'un profil de sortie, en un espace colorimétrique d'impression compatible avec l'imprimante, et un fichier d'image d'impression est généré (106),
d) au cours duquel le motif à imprimer est fourni sous forme de fichier d'image de référence dans l'espace colorimétrique d'entrée avec une résolution de numérisation spatiale correspondant à celle d'un système de mesure par imagerie à utiliser par la suite, puis est transféré par un système de gestion des couleurs, à l'aide d'un profil d'entrée, dans un espace colorimétrique normalisé L*a*b, et des données d'image de référence L*a*b sont générées (108),
e) au cours duquel les données d'image de référence L*a*b sont transférées dans l'espace colorimétrique d'impression à l'aide du profil de sortie, et un fichier d'image de référence CYMK est généré (110),
f) au cours duquel le motif est imprimé par une imprimante comportant au moins une tête d'impression, à partir du fichier d'image d'impression, sur un support, selon une trame de pixels composée de lignes s'étendant dans le sens transversal par rapport à la direction d'impression et de colonnes s'étendant dans la direction d'impression, à l'aide d'au moins une encre d'impression (112),
g) au cours duquel l'image imprimée est mesurée, au moins par sections, à l'aide d'un système de mesure par imagerie présentant une résolution de balayage spatiale, en particulier dans la zone comportant quelques pixels imprimés, ligne par ligne dans le sens de l'impression, et un fichier d'image de mesure composé de lignes et de colonnes est généré (114),
h) au cours duquel le fichier d'image de mesure est transféré, à l'aide d'un profil d'entrée, en un fichier d'image de mesure L*a*b (116),
i) au cours duquel le fichier d'image de mesure L*a*b est transféré dans l'espace colorimétrique d'impression à l'aide du profil de sortie, et un fichier d'image de mesure CYMK est généré (118),
j) au cours duquel le fichier d'image de référence CIELAB est aligné sur le fichier d'image de mesure CIELAB, ou le fichier d'image de référence CYMK sur le fichier d'image de mesure CYMK (120),
k) au cours duquel un fichier d'image de différence de numérisation est généré (122), au moins par sections, à partir du fichier d'image de référence CYMK et du fichier d'image de mesure CYMK,
l) au cours duquel le fichier d'image de différence numérisation est transféré, à partir de la résolution de numérisation, en un fichier d'image de différence d'origine à la résolution d'origine, grâce à l'application d'algorithmes mathématiques, en particulier l'interpolation scalaire simple, bilinéaire ou bicubique (124),
m) au cours duquel les valeurs de différence du fichier d'image de différence d'origine sont déterminées composant par composant, en particulier colonne par colonne ou pixel par pixel (126),
n) au cours duquel, lorsque les valeurs des différences dépassent un seuil prédéfini, le fichier d'image d'impression est corrigé en fonction des valeurs des différences du fichier d'image d'origine, en particulier de manière additive ou proportionnelle, puis enregistré en tant que nouveau fichier d'image d'impression (128).

2. Procédé selon la revendication 1,
au cours duquel le fichier d'image d'impression corrigé selon la caractéristique n) est utilisé de manière itérative comme fichier d'image d'impression dans les étapes f) à n) du procédé.

3. Procédé selon la revendication 1 ou 2, au cours duquel, lorsque les valeurs de différence ne dépassent pas une valeur seuil prédéfinie, les étapes f) à n) du procédé pour la surveillance du fonctionnement d'au moins une tête d'impression sont à nouveau exécutées dans un intervalle de temps prédéfini.
